# EUROPEAN PATENT SPECIFICATION

(11) **EP 1 963 453 B1**
(45) Date of publication and mention of the grant of the patent: **27.04.2011**
(21) Application number: 06845540.1
(22) Date of filing: 14.12.2006
(51) Int. Cl.: C09J 123/26, C09D 123/26

(54) **ADHESIVE AND COATING COMPOSITIONS**
KLEBSTOFF UND BESCHICHTUNGSZUSAMMENSETZUNGEN
COMPOSITIONS ADHESIVES ET DE REVETEMENT

(30) Priority: 20.12.2005 US 313167
(43) Date of publication of application: 03.09.2008
(73) Proprietor: Henkel Corporation, Gulph Mills, PA 19406 (US)
(72) Inventor: SOMMERFELD, Eugene G., Danvers, MA 01923 (US); RAMALINGAM, Balasubramaniam, Cary, NC 27511 (US)
(74) Representative: Endres, Helmut
(86) International application number: PCT/US2006/047920
(87) International publication number: WO 2007/075419

(56) References cited:
- WO-A1-2004/009882
- JP-A- 2003 048 925
- JP-A- 2004 010 809
- US-B1- 6 207 748
- US-B1- 6 235 818
- US-B1- 6 299 985

## Description

### FIELD OF THE INVENTION

The instant invention relates to heterophase blends of segmented copolyesterethers and metallocene-catalyzed polyethylene-co-alpha-olefin plastomers that are useful as adhesives/coatings applied to substrates by various melt application techniques.

### BACKGROUND OF THE INVENTION

Hot melt adhesives utilizing metallocene-catalyzed polyolefins (i.e., polyolefins produced using metallocene catalysts) have been found to offer certain advantages over adhesives made from polyolefins derived from traditional Ziegler-Natta catalysts. Ziegler-Natta catalysts are heterogeneous catalysts containing many active sites having different levels of activity and selectivity. Metallocene catalysts; in contrast, are homogeneous or "single-site" catalysts and offer superior control of polymer structure and morphology, as well as molecular weight and distribution. The use of metallocene catalysts also allows incorporation of difficult-to-polymerize monomers, e.g., certain alpha-olefins, into the polymer backbone at levels significantly higher than those possible with the older Ziegler-Natta catalyst technology. The incorporation of alpha-olefin comonomers at increased concentrations coupled with the tight control of the polymerization process and monomer distribution have yielded new polyolefin plastomers with potentially enhanced compatibility in polyolefin and other polymer blends.

Generally, plastics or elastomers that are heterophase blends of copolyesters or copolyesterethers and polyethylenes are incompatible and require the addition of polyolefin copolymers that contain functional moieties. Examples of such compositions can be found, for example, in U.S. Patent Nos. 4,073,827, 4,368,295, 4,771,106, 5,618,881, and 6,462,132; Kalfoglou, et al., Polymer, 36 (23), (1995), 4453-4462; and Papadopoulou, et al., Polymer, 41 (7), (2000), 2543-2555. These functionalized polyolefins are believed to serve the role ofheterophase blend compatiblilizers preventing macrophase separation of the components in the plastic/elastomer which if not utilized would yield heterophase blend alloys with severe losses of their bulk mechanical properties. It is also known that hot melt adhesives involving multiphase blends of copolyesters or copolyesterethers and minor concentrations (< 45 wt %) of polyethylene polymers also require the use of external compatibilizer additives to prevent phase separation of the components. These functionalized compatibilizers can cause undesired alterations of the intended adhesive properties (e.g., viscosity) when the adhesive is exposed to elevated temperatures for extended periods of time using commercial adhesive application techniques. Unlike the controlled temperature and short time at temperature generally utilized in the production blending and final product extrusion of plastic/elastomer blend products, adhesive applications are less continuous with greater time and time variations at application temperature. In particular, external functionalized compatibilizers can crosslink the polyester segment (resulting in melt viscosity increases) or cause loss of viscosity due to catalyzed saponification or deesterification. This results in processability issues, yielding unacceptable adhesive application characteristics and/or performance. In addition, semicrystalline flexible copolyester or copolyesterether adhesives of the prior art that do not contain polyolefins tend to rapidly lose adhesion properties over time, particularly when exposed to high temperature and humidity.

Also known in the art are blends of a copolyester or copolyesterether resin and a functionalized polyolefin resin. While exhibiting much better compatibility versus a second component consisting solely of non-functionalized polyolefin, the functional groups can cause problems similar to those discussed above for heterophase compositions utilizing these functionalized polyolefin as compatibilizers. Compositions using functionalized polyolefins as the sole component in the discrete phase of the blend include those described in U.S. Patent No. 4,720,524.

One approach to providing a composition having improved initial and retained aged adhesion is found in U.S. Patent No. 6,774,183 which discloses a polyester compound having low polarity block segments in the polyester backbone. The low polarity segments in these compounds can be a polymeric or oligomeric olefin or siloxane.

There is a continued need in the art for polyester/polyolefin or polyesterether/polyolefin heterophase blend alloy hot melt adhesives which can avoid the undesirable properties (e.g., elevated temperature viscosity instability) of the multiphase adhesives utilizing functionalized compatibilizers taught by the art. There is a further need in the art for such compositions having improved initial and retained aged adhesion, particularly, for certain compositions, at sustained exposure to extreme humidity and elevated temperatures.

### SUMMARY OF THE INVENTION

The instant invention uses an adhesive composition in laminating applications. The composition comprises 100 parts of one or more segmented copolyesterethers and 3 to 45 parts of one or more metallocene-catalyzed polyethylene-co-alpha-olefin plastomers, wherein the alpha-olefin is a C₃-C₁₂ alpha-olefin. Preferably, from 3 to 45 parts by weight of plastomer per 100 parts by weight of segmented copolyesterether are present in the composition. The composition is substantially free of external compatibilizers. The invention uses a composition comprising:
(a) about 100 parts by weight of a segmented copolyesterether derived from:
   one or more C₂-C₁₂ aliphatic or C₅-C₁₂ cycloaliphatic glycol(s);
   one or more α,ω-hydroxy terminated polyalkyleneoxide(s) having a number average molecular weight of from about 250 to about 6000 as determined by calculation using the hydroxyl number titration (2 x 56100/OH #); and
   one or more dibasic acid compounds selected from the group consisting of C₈-C₃₆ aromatic dibasic acids, cycloaliphatic dibasic acids, C₆-C₁₂ linear aliphatic dibasic acids and C₁-C₄ dialkylesters thereof; and
(b) about 3 to about 45 parts by weight of one or more metallocene-catalyzed polyethylene-co- (C₃-C₁₂) alpha-olefin plastomers having a density of from about 0.85 to about 0.91 g/cm³, said plastomer being substantially free of functional groups;
wherein the heterophase blend composition is substantially free of an external compatibilizer such as a functionalized polyolefin multiphase blend compatibilizer.

In some embodiments, the preferred weight ratio of (a) to (b) is within the range 100/5 to 100/35. In yet other embodiments, a more preferred weight ratio of (a) to (b) is within the range 100/10 to 100/30.

In the invention, the compositions are used as adhesives applied in various forms and melted to form a bond to a substrate or between substrates.

### DETAILED DESCRIPTION OF ILLUSTRATIVE EMBODIMENTS

The present invention uses a segmented copolyesterether/metallocene-catalyzed polyethylene-co-alpha-olefin heterophase adhesive blend with excellent viscosity stability over extended periods of time at elevated application temperatures. The blend compositions are tough and flexible even at low temperatures and possess improved initial and retained aged substrate adhesion. Some select compositions, while haying excellent low temperature toughness and flexibility, possess very good hydrolytic stability (saponification resistance) and retained substrate adhesion even after prolonged exposure to excessive humidity and elevated temperature. In some embodiments, the adhesive is a hot melt adhesive. In certain preferred embodiments, the adhesive is a laminating adhesive. In some cases, the adhesive can be applied or preapplied to inorganic or organic substrates in the form of a ribbon, bead, coating, film, plurality of dots, dispersion, paste, web or powder followed by post heating to volatilize carrier liquids (if any) and to melt, coalesce and fuse the adhesive to an adherend. Suitable substrates include inorganic and organic films, fabrics, foils, fibers, and the like.

In some embodiments, the invention uses a heterophase blend composition comprising:
(a) about 100 parts by weight of a segmented copolyesterether derived from:
   one or more glycols selected from the group consisting of C₂-C₁₂ aliphatic and C₅-C₁₂ cycloaliphatic glycols;
   one or more α,ω-hydroxy terminated polyalkyleneoxides having a number average molecular weight of from about 250 to about 6000; and
   one or more dibasic acid compounds selected from the group consisting of C₈-C₃₆ aromatic dibasic acids, cycloaliphatic dibasic acids, C₆-C₁₂ linear aliphatic dibasic acids and C₁-C₄ dialkylesters thereof; and
(b) about 3 to about 45 parts by weight of one or more metallocene-catalyzed polyethylene-co-(C₃-C₁₂ )alpha-olefin plastomers having a density of from about 0.85 to about 0.91 g/cm³, said plastomer(s) being essentially free of reactive functional groups; wherein the heterophase blend composition of (a + b) is essentially free of additional compatibilizers and more particularly external reactive functionalized polyolefin blend compatibilizers. "Derived from" means that the segmented copolyesterether is prepared by or obtained from polymerization of the specified reactants or equivalents thereof,
without necessarily limiting the possibility that one or more other types of reactants may be used in such polymerization.

In certain embodiments, the α,ω-hydroxy terminated polyalkyleneoxide has a number average molecular weight of from about 650 to about 6000. In other embodiments, the segmented copolyesterether of component a) is derived from:
one or more glycols selected from the group consisting of C₂-C₁₂ aliphatic and C₅-C₁₂ cycloaliphatic glycols;
one or more α,ω-hydroxy terminated polyalkyleneoxides having number average molecular weights of from about 650 to about 6000; and
one or more dibasic acid compounds selected from the group consisting of C₈-C₃₆ aromatic and cycloaliphatic dibasic acids and their C₁-C₄ dialkylesters.

The C₂-C₁₂ aliphatic and/or C₅-C₁₂ cycloaliphatic glycol(s) can comprise one or more of 1,4-butanediol (also known as 1,4-tetramethylene glycol), 1,6-hexanediol and 1,4-cyclohexanedimethanol. In certain embodiments, the C₂-C₁₂ aliphatic and/or C₅-C₁₂ cycloaliphatic glycol(s) comprises 1,4-butanediol. In yet other embodiments, the C₂-C₁₂ aliphatic and/or C₅-C₁₂ cycloaliphatic glycol comprises cyclohexanedimethanol. The C₂-C₁₂ aliphatic glycol may be straight chain or branched. The hydroxy groups of the glycol(s) employed are preferably primary hydroxy groups, although glycols containing secondary hydroxyl groups could also be present.

In some embodiments of the invention, the α,ω-hydroxy terminated polyalkyleneoxide is a compound where each alkylene segment is a C₂ to C₈ alkylene segment, which can be linear or branched in structure (e.g, ethylene, trimethylene, tetramethylene) One such compound is polytetramethyleneoxide glycol. Some polytetramethyleneoxide glycols have a number average molecular weight (Mn) of from about 650 to about 2000.

In some embodiments, aromatic and/or cycloaliphatic dibasic acids or esters are preferred: Suitable C₈-C₃₆ aromatic and /or cycloaliphatic dibasic acids, or their C₁-C₄ dialkylesters, include 1,4-cyclohexanedicarboxylic acid (CHDA) and/or terephthalic acid and the dialkylesters thereof. Preferred C₁-C₄ dialkylesters include dimethylesters of the aforementioned dibasic acids.

In some aspects, the invention uses a composition as described herein where the C₂-C₁₂ aliphatic and/or C₅-C₁₂ cycloaliphatic glycol comprises butanediol and /or 1,6-hexanediol, and/or cyclohexanedimethanol, the α,ω-hydroxy terminated polyalkyleneoxide is a polytetramethylene glycol, and the C₈-C₃₆ aromatic or cycloaliphatic dibasic acid or C₁-C₄ dialkylester thereof is 1,4-cyclohexanedicarboxylic acid, terephthalic acid or isophthalic acid or a dimethylester thereof.

In some embodiments, the molecular weight (Mw, weight average) of the segmented copolyesterether is between about 20,000 and 110,000, in some embodiments, between about 30,000 and about 85,000, and in certain embodiments, between about 30,000 and about 75,000. The molecular weight of the segmented copolyesterether is determined by gel permeation chromatography (GPC) using a polystyrene standard.

In some embodiments, the segmented copolyesterether is slightly branched. In such compositions, a minor amount of trifunctional glycol (e.g., trimethylolpropane) or acid (e.g., trimellitic acid or anhydride) can be used in the composition. The amount of this branching agent can be in the range of about 0.1 to about 2 mole % based on the total bound glycols and/or acids.

The compositions used in the instant invention are adhesives. In some embodiments, the adhesive is applied in molten form (e.g., via extruder) to a surface of a first substrate and then fused immediately (before solidification of the molten adhesive) to the surface of a second substrate, which may be the same as or different from the first substrate, to form a composite such as a laminate. The surfaces to be fused or joined together using the compositions of the present invention may also be part of the same substrate (for example, the substrate may be folded upon itself, with the adhesive being utilized to fasten the overlapping sections of the substrate to each other). Alternatively, the hot melt adhesive-coated substrate can be cooled, stored and later heat fused to another substrate or to itself to form the composite (preapplied adhesive- post heat seal). In some embodiments, the adhesives can be utilized employing various other application techniques. These techniques can include, but are not limited to; application of the adhesive composition in a dispersion, paste, film, web or powder form onto the substrate surface followed by application of heat to fuse the adhesive to the substrate surface (and in some cases to drive off carrier fluids as well) followed by immediate or delayed (preapplied adhesive) bonding to the surface of the same or alternate substrate. One skilled in the art can readily determine the amount of heat, time and pressure needed for a particular hot melt adhesive application or technique.

The invention concerns an article comprising a substrate and an adhesive composition. In some embodiments, the substrate is a fabric or film. In one preferred embodiment, the film is a polyester film such as a polyethyleneterephthalate film.

The invention also concerns a method of making an article comprising applying the adhesive composition to a substrate. In some embodiments, the article comprises two or more layers of the same or different substrates which are bound together by a composition of the instant invention.

Segmented copolyesterethers suitable for use in the present invention and corresponding to the compositional requirements previously mentioned can be made by any conventional method. The segmented copolyesterethers may have a block structure, containing one or more polyether blocks (segments) derived from the α,ω-hydroxy terminated polyalkyleneoxide(s) and one or more polyester blocks (segments) derived from the glycol(s) and dibasic acid compound(s). Preferably, the copolyesterethers are prepared by standard polycondensation processes utilizing difunctional alcohols, α,ω-hydroxy terminated polyalkyleneoxides, and dicarboxylic acids or their dialkylesters.. In some embodiments, optionally up to about 2 mole % (based on the total moles of bound glycols and/or acids) of one or more polyfunctional branching agents may be employed. The synthesis may occur in two stages, with the first stage being a direct esterification or transesterification (alcohololysis) stage and the second stage being a polyesterification stage. Selective esterification or transesterification and second stage polyesterification catalysts are added at appropriate stages. See, e.g. V. V. Korshak and S. V. Vinogradova, Polyesters, Chapter III, pp. 72-150, Pergamon Press, N.Y., N.Y., (1965). In some embodiments, all reactants are present during the first stage. In certain embodiments, however, the α,ω-hydroxy terminated polyalkyleneoxide can be added at the second stage.

Suitable glycols useful in the practice of the present invention include C₂-C₁₂ alkyl diols, such as ethylene glycol, diethylene glycol, butanediol, propanediol, hexanediol, 2-methyl-1,3-propanediol, neopentyl glycol and the like; and C₅ to C₁₂ cycloaliphatic diols, such as cyclohexanedimethanol and the like. Particularly preferred glycols include butanediol, 1,6-hexanediol and cyclohexanedimethanol.

The invention also utilizes α,ω-hydroxy terminated polyalkyleneoxides. Suitable compounds include those with C₂ to C₈ alkylene groups (e.g., dimethylene, trimethylene, tetramethylene). One particularly preferred α,ω-hydroxy terminated polyalkyleneoxide is polytetramethyleneoxide glycol. In some embodiments, the α,ω-hydroxy terminated polyalkyleneoxide has a number average molecular weight, (Mn) of about 250 to about 6000. In other embodiments, Mn is about 650 to about 3000. In yet other embodiments, Mn is about 650 to about 2000.

Some examples of difunctional carboxylic acids useful in the practice of the present invention include: cycloaliphatic diacids, such as cyclohexane dicarboxylic acid, C₃₆ dicarboxylic dimer fatty acids and the like; and aromatic diacids, such as terephthalic acid, isophthalic acid, naphthalene dicarboxylic acid and the like; and linear aliphatic dibasic acids (e.g., C₄ to C₂₂ linear aliphatic dibasic acids) such as adipic acid, azelaic acid, sebacic acid, dodecandioic acid and the like and the lower (C₁ to C₆) alkyl esters of said dicarboxylic acids. Particularly preferred difunctional carboxylic acids are terephthalic acid, cyclohexanedicarboxylic acid and isophthalic acid.

In the instant compositions, it is preferred that the polyester segments of the copolyesterethers are crystalline in nature (with a melting point > 40 deg C). In some of the preferred compositions, one of the criteria for the selection of the glycols and diacids used in these segments is whether the polyester segment would have good hydrolytic stability. Thus, in some embodiments, ethylene glycol and linear aliphatic diacids or their analogous alkylesters are avoided but C₄ to C₁₂ diols (such as butanediol, 2-methyl-1,3-propanediol, neopentyl glycol, hexanediol, cyclohexane dimethanol and the like) and terephthalic, isophthalic, orthophthalic (anhydride) acids or their alkylesters as well as the isomers of cyclohexanedicarboxylic acid (or their alkylesters) are preferred.

Polyethyleneterephthalate (PET) laminate composites utilizing the most preferred heterogeneous blend compositions of this invention are expected to retain much of their initial adhesive strength and substrate adhesion even after being exposed to 95% relative humidity (RH) at 50 °C for an extended period of time. Ethylene glycol-based crystalline flexible copolyesters containing significant amounts of linear aliphatic acid components eventually hydrolyze under these test conditions over time to yield aged laminates with reduced adhesive cohesive strength as well as significantly reduced interfacial substrate adhesion. In certain embodiments, the α,ω-hydroxy terminated polyalkyleneoxide used to prepare the copolyesterether contains alkylene segments greater than or equal to C₄ and preferably has a Mn of about 650 to about 2000. In one preferred embodiment, the copolyesterether is prepared using polytetramethyleneoxide glycol with a Mn of about 1000 to 2000.

Some preferred metallocene-catalyzed polyethylene-co-alpha-olefin plastomers (also sometimes referred to as "elastomers") suitable for use in the present invention have a density of about 0.860 to about 0.91 g/cc and a DSC melting point within the range of 45° to 130° C. In certain embodiments, this component has a melt index of about 2dg/min to about 100dg/min (conditions: Melt Index, 190°C/2.16 kg, dg/min as described in ASTM D-1238). Certain metallocene-catalyzed polyethylene-co-alpha-olefins are ultra-low density plastomers having a density of 0.865 to 0.889 g/cc and a DSC melting point within the range of 45° C to 85° C.

As used herein, a plastomer is defined as a copolymer of ethylene and one or more alkenes. Plastomers useful in the instant invention are typically copolymers of ethylene and alpha-olefins having 3 to 10 carbon atoms such as propylene, 1-butene, 1-hexene, and 1-octene. Such plastomers are commercially available from DuPont/Dow Elastomers, under the trademark ENGAGE®, Dow Plastics under the trademark Affinity® and from ExxonMobil Chemicals under the trademarks EXACT® and Vistamaxx®. In some preferred embodiments, suitable polyethylene-co-alpha-olefins include those where the alpha-olefin comonomer is a C₃ to C₁₂ alpha-olefin or mixture of such alpha-olefins. Some preferred compositions use C₃, C₄, C₆ and/or C₈ alpha-olefin comonomers.

In some embodiments, the metallocene-catalyzed polyethylene-co-alpha-olefin plastomers are made by a process involving copolymerization of ethylene and at least one C₃-C₁₂ alpha-olefin using a single-site metallocene catalyst. Metallocene-catalyzed copolymerization processes, and particularly the catalysts and catalyst support systems used, are the subject of numerous patents, including U.S. Pat. Nos. 4,542,199; 5,189,192; 5,352,649 and 5,349,100. There is a significant amount of information in the literature concerning the copolymers prepared from such processes and reference may be made to, for example, U.S. Pat. Nos. 4,937,299; 5,272,236; 5,278,272; 5,665,800; and 5,783,638. "Metallocene-catalyzed" includes processes using true metallocene catalysts as well as other types of single site polymerization catalysts known in the art.

The segmented copolyesterether(s) and the metallocene-catalyzed polyethylene-co-alpha-olefin plastomer(s) or elastomer components (plus minor blend components and additives such as antioxidants, light stabilizers, tackifiers, plasticizers, fillers, pigments, adhesion promoters, waxes, flame retardants, viscosity modifiers/rheology control agents, foaming agents, etc.) can be melt blended or mixed by standard means well known to those skilled in the art. These techniques include use of a Buss Kneader Extruder, twin screw extruder, and Braebender or Haake Mixing Chamber (roller blades).

The metallocene-catalyzed polyethylene-co-alpha-olefin plastomers used in the instant invention are substantially free of reactive functional groups which would react when heated with polyester components or segments. Heat-reactive functional groups include glycidyl, carboxylic acid or salts thereof, anhydride, hydroxyl, as well as (meth)acrylate and vinyl ester groups. By substantially free of functional groups it is meant that less than 1.0% of the monomer units of the plastomer contain such a functional group, preferably less than 0.1 % in some embodiments, and more preferably no such functional groups are present.

In preferred embodiments, the blend compositions of the present invention do not contain or require external compatibilizers and more particularly heat-reactive functionalized compatibilizers (also referred to as external reactive functionalized polyolefin blend compatibilizers). An external compatibilizer is a composition that is added to an adhesive blend of two or more incompatible components to reduce phase separation and discontinuous phase size within the adhesive mixture. With the correct compatibilizer selection and concentration the resultant heterogeneous or multiphase blends have greater phase compatibility as well as adhesion at their interfaces and thus demonstrate significantly improved mechanical and physical properties. When one utilizes external functionalized reactive compatibilizers, they are added along with the other components of these blends using compounding extruders with short residence times and at the minimum temperatures to produce the desired heterophase product. However, when these multiphase blends are used commercially as hot melt adhesives they must retain viscosity stability at much longer residence times as well as higher temperatures in the equipment used in the adhesive application process. It was found that with compositions of the instant invention, external reactive functionalized compatibilizers will either crosslink the copolyester segment in the polyesterether of the blend or at times cause loss of the adhesive blend viscosity due to catalytic saponification of the copolyester segment. This results in unacceptable adhesive processability and application stability along with resultant unacceptable applied adhesive blend properties. As such, it is preferred that the instant invention be performed substantially free of external reactive functionalized compatibilizers as used in the prior art.

As used herein, "substantially free of external compatibilizer", means the adhesive contains less than 2.5% by weight, preferably less than 1 %, more preferably less than 0.5% by weight, of such compatibilizer; even more preferably no such compatibilizer is present. The weights are based on the total weight of the adhesive composition.

Antioxidants may be used in the compositions of the instant invention. Any antioxidants that do not interfere with the desired adhesive properties can be used. Suitable antioxidants include Cyanox® XS4 (phenolic/phosphite blend from Cytec Industries) and Irganox® 1010 (from Ciba Specialty Chemicals) and the like.

Light stabilizers may also be used in the instant compositions. Numerous such compounds are known to those skilled in the art and any of these compounds may be used so long as they do not produce undesirable properties. Suitable light stabilizers include Cyasorb® UV 5411 or LV-100 (benzotriazole chemistry) and Cyasorb® UV 1164 (triazine chemistry) from Cytec Industries and Tinuvin® 234 (benzotriazole chemistry) and Tinuvin® 1577 (triazine chemistry) from Ciba Specialty Chemicals.

Any of the other additives conventionally employed in the formulation of adhesives, especially hot melt adhesives, may additionally be present in the adhesive compositions of the present invention including, for example, fillers (including organic as well as inorganic fillers, which may be any suitable physical form such as powders, fibers, and the like), plasticizers, processing aids, tackifiers, waxes, colorants, adhesion promoters, coupling agents, and the like. One or more solvents may be present, although in preferred embodiments of the invention the adhesive composition is essentially free of solvents and other volatile organic compounds (VOCs).

One advantageous property of the compositions of this invention is that as laminating adhesives they possess improved initial adhesion and retain much of their interfacial substrate adhesion after full crystallization and, in some of the most preferred blend compositions, retain their adhesion even after prolonged exposure to 95% relative humidity (RH) at 50 °C (humidity chamber). Unmodified semicrystalline copolyesters as well unmodified copolyesterether elastomers (i.e., materials free of metallocene-catalyzed polyethylene-co-alpha olefin), when applied as an adhesive to polymeric substrates or common metal surfaces, yield decent green peel strengths (within the first 6 hrs of application), but after full crystallization and aging (3-4 days after application), the peel values invariably decrease at least 50% compared to the initial green values. While not wanting to be bound by theory, this property is believed to be due to shrinkage of the applied adhesive as it transitions in time from the amorphous state to the crystalline state resulting in increasing density and decreasing volume. The short-range van der waals forces, initially established by the hot melt-applied amorphous adhesive at the adhesive/substrate interface, are believed to be partially destroyed in time by shrinkage along the adhesive/substrate surface breaking a large portion of the initial interfacial adhesion forces. In addition, another consequence of adhesive crystallization, resulting from internal lamella formation, is the volume decrease of the amorphous regions in the bulk adhesive material itself. The amorphous regions within a semicrystalline adhesive are believed to be the primary source of interfacial adhesion forces at a substrate's surface with crystalline and spherulitic regions, for the most part, non-contributing. The blending of 5-45 parts by weight low density metallocene-catalyzed polyethylene-co-α-olefins, without the use of external compatibilizers and more particularly without the use of reactive functionalized polyolefin compatibilizers, with 100 parts preferred segmented copolyesterether elastomers produces strong green adhesive/substrate interfacial bonds and with similar to even higher bond values after aging seven days. These unique non-functional low density polyolefin plastomer blend components employed in this invention appear to be internally compatibilized and stabilized by the polyether block segment (650 to 2000 Mw in some embodiments) of the segmented block copolyesterether elastomer. Thus, the resultant metallocene-catalyzed polyolefin ("m-polyolefin") plastomer exhibits dispersed discontinuous small phase size, increased continuous/discontinuous interphase formation and good resultant interfacial adhesion at the m-polyolefin plastomer (discontinuous)/segmented block copolyesterether elastomer (continuous) phase boundaries and yields retained adhesive toughness and cohesive strength in the bulk along with tenacious retained aged adhesion to various substrates. Retained aged adhesion of the most preferred blend compositions is maintained in laminate constructions even after prolonged exposure to elevated humidity and temperatures.

One advantage of the instant invention is that external compatibilizers, and more particularly, reactive functionalized compatibilizers, are not required to prevent macrophase separation of the heterophase blend components and thus these segmented block copolyesterether elastomer/m-polyolefin plastomer multiphase blend compositions are extremely stable through even abusive and extreme adhesive hot melt processing conditions and applications. Semicrystalline copolyesters (substantially devoid of polyalkyleneoxide block segments) require the use of reactive functionalized olefin compatibilizers when blended with m-polyolefin copolymers to prevent gross macrophase separation. Retained aged adhesion is obtained but the adhesive bulk cohesive strength is somewhat lacking due to deficient interfacial adhesion at the phase boundaries even with the use of functionalized compatibilizers. Also, when such blends are used in hot melt applications with exposure to extended thermal processing, increases in viscosity increases are observed. Depending upon the reactive functionalized polyolefin compatibilizer used, gelation or other stability problems can result. The use of copolyester/ functionalized polyolefin copolymer compatibilizer/m-polyolefin plastomer blends as hot melt adhesives is therefore problematic on a commercial basis when employing various hot melt processing methods and application techniques.

When the adhesives of the instant invention are applied in thin films (3-5 mils in thickness), they appear transparent to partially translucent. Upon the transmission of visible light the adhesive layer appears pinkish upon light refraction, indicating a dispersed phase size of the m-polyethylene-co-α-olefin of ∼0.6 µm. There is no streakiness or macrophase separation and it is observed that the metallocene-catalyzed low-density non-functional polyolefin plastomers/elastomers have much greater compatibility characteristics than the older Ziegler Natta catalyzed linear low density polyethylenes (LLDPE), low density polyethylenes (LDPE), high density polyethylenes (HDPE), or polypropylenes (PP). The metallocene-catalyzed polyethylene-co- (C₃-C₈) alpha-olefin plastomers/elastomers, however, appear to be stabilized as the discontinuous phase (partially compatibilized) in these blends by the polyether block segments (e.g., polytetramethyleneoxide having a Mn of about 1000 to 2000) that are believed to be acting as an internal polymeric m-polyolefin plastomer surfactant resident in the segmented copolyesterether continuous phase. These plastomers, on the other hand, are compatible with or compatibilized by copolyesters that do not not contain polyalkyeneoxide block segments. The adhesive layer in these latter heterophase adhesive blend compositions is opaque, striated and macrophase separated with poor mechanical properties, e.g., low elongation and tensile strength (poor continuous/discontinuous phase interfacial adhesion), and as such would not or could not yield commercially acceptable adhesives.

Another benefit of the blend compositions of this invention, when such compositions are used in hot melt preapplied film adhesive applications, is improved block resistance within the wound-up rollstock. That is, the adhesive-coated side of the film exhibits a reduced tendency to adhere to the uncoated side of the film when the film is wound up upon itself in a roll. Additionally, when these blend compositions are produced in a Buss Kneader Extruder followed by underwater strand slicing and fluidized bed drying, improved pellet formation and block resistance upon packing (in the collecting container) are observed. The improved block resistance is thought to be due to the m-polyolefin plastomer dispersed phase in the adhesive blend, which results in lower energy improved release surfaces.

The invention also relates to articles comprising an inorganic or organic substrate and a hot melt adhesive. The adhesive can be applied to the substrate by conventional means well known to those skilled in the art of hot melt adhesives. In some embodiments, the substrate is comprised of a material selected from the group consisting of glass, plastics, rubbers, metals, cellulosic materials (e.g., wood, paper, cardboard), ceramics or some combination of such materials. The substrate may be in any suitable form such as, for example, a fabric (e.g., a woven or non-woven cloth or mat), plate, sheet, strip, foil or film. The adhesives of the present invention may be utilized in any end-use application where conventional hot melt adhesives are employed, such as packaging, bookbinding, disposable paper products, wood bonding, shoemaking, film lamination, and textile binding.

The adhesive compositions used in present invention are particularly useful for joining together relatively thin, flexible substrates such as films and foils to form laminates. The laminate may comprise a plurality of layers of the same or different composition that are laminated together such that the layers in combination provide the laminate with the properties desired. The substrates to be adhered to each other using the adhesive compositions of the present invention may contain a single layer or multiple layers (e.g., a single layer polymeric film may be laminated to a coextruded film substrate containing a plurality of different polymeric layers).

The film or films to be coated or adhered to each other using the adhesive formulations may be comprised of any of such materials known in the art, including both polymeric and metallic materials as well as paper (including treated or coated paper). Thermoplastics are particularly preferred for use as at least one of the layers. The materials chosen for individual layers in a laminate are selected to achieve specific desired combinations of properties, e.g., mechanical strength, tear resistance, elongation, puncture resistance, flexibility/stiffness, gas and water vapor permeability, oil and grease permeability, heat sealability, adhesiveness, optical properties (e.g., clear, translucent, opaque), formability, merchantability and relative cost. Individual layers may be pure polymers or blends of different polymers. The polymeric layers are often formulated with colorants, anti-slip, anti-block, and anti-static processing aids, plasticizers, lubricants, fillers, stabilizers and the like to enhance certain layer characteristics.

Particularly preferred polymers for use in films to be joined using the adhesive compositions include, but are not limited to, polyethylene (including low density polyethylene (LDPE), medium density polyethylene (MDPE), high density polyethylene (HPDE), high molecular weight, high density polyethylene (HMW-HDPE), linear low density polyethylene (LLDPE), linear medium density polyethylene (LMPE)), polypropylene (PP), oriented polypropylene, clarified polypropylene (CPP), polyesters such as poly (ethylene terephthalate) (PET) and poly (butylene terephthalate) (PBT), ethylene-vinyl acetate copolymers (EVA), ethylene-acrylic acid copolymers (EAA), ethylene-methyl methacrylate copolymers (EMA), ethylene-methacrylic acid salts (ionomers), hydrolyzed ethylene-vinyl acetate copolymers (EVOH), polyamides (nylon), polyvinyl chloride (PVC), poly(vinylidene chloride) copolymers (PVDC), polybutylene, ethylene-propylene copolymers, polycarbonates (PC), polystyrene (PS), styrene copolymers, high impact polystyrene (HIPS), acrylonitrile-butadiene-styrene polymers (ABS), and acrylonitrile copolymers (AN). The polymeric film may be oriented in one or both directions.

The polymer surface may be treated or coated, if so desired. For example, a film of polymer may be metallized by depositing a thin metal vapor such as aluminum onto the film's surface. A layer of inorganic oxide may also be deposited upon the polymeric film. Coating the film with a layer of metal or inorganic oxide may enhance the barrier properties of the finished laminate. The polymer film surface may also be coated with anti-fog additive or the like or subjected to a pretreatment with electrical or corona discharges, or ozone or other chemical agents to increase its adhesive receptivity.

One or more layers of the laminate may also comprise a metal foil, such as aluminum foil, or the like. The metal foil will preferably have thickness of about 5 to 100 µm. The individual plastic films comprising the laminates can be prepared in widely varying thicknesses, for example, from about 5 to about 200 microns.

The invention also concerns methods of making an article. These methods comprise applying an adhesive to a substrate's surface. Any of the methods known in the hot melt adhesive art to be suitable for applying such an adhesive to a substrate may be adapted for use with the present adhesive compositions, including, without limitation, the use of hand-held hot melt adhesive guns, valves dispensing nozzles, dispensing machines that pump the molten adhesive through a slot die, and the like. For the application of the adhesive composition in a complex pattern to the substrate surface, an embossed roll may be employed. The adhesive composition may also be supplied to the application device and/or the.substrate surface in the form of sticks, pellets, flat films or sheets, rolls, fibrous nonwovens, powders, strings, ropes, or bulk masses. For example, the adhesive may be maintained in molten form in a tank or other suitable heated container and then dispensed as needed. The use of liners is also contemplated, wherein the adhesive is initially placed as a coating, layer or plurality of dots or lines on a release liner and then transferred to another substrate for use as an adhesive. In addition to hot-melt bonding, the adhesive may be applied to the substrate surface, cooled so as to solidify the adhesive coating, and then later heat-activated, i.e., remelted). Suitable substrates include those described above. In some preferred embodiments, the adhesive is used to bind two or more substrate surface layers together, to form a composite or laminate, for example. The adhesively bound substrate surface layers may consist of the same substrate material or they may be different.

The adhesives can, for example, be applied to the substrate surface in layers that are 0.1 to 10 mils (2.5µm -250µm) in thickness. In some preferred embodiments, the thickness of the adhesive layer is 0.5 to 5 mils (12.5µm - 125µm).

The invention is illustrated by the following examples which are intended to be illustrative but not limiting.

### Examples

Commercially available random copolyesters used in the comparative examples include those made by EMS Griltech. Two such compositions are EMS Griltex® D 1810 (1,4-butanediol//terephthalic acid/sebacic acid, 100//50/50 bound mole ratio, DSC Mp = 105 deg C, Tg =-38 °C, MI = 75g/10min @ 160 °C, 2.16kg, and Melt Viscosity = 170Pa-s @160 deg C) and EMS Griltex® D 1553 (1,4-butanediol/1,6-hexanediol//terephthalic acid/adipic acid, 50/50//70/30 bound mole ratio (not confirmed by the distributor), DSC Mp = 92 °C, Tg = -13 °C, MI = 43g/10min @160 °C, 2.16 kg, and Melt Viscosity = 300Pa-s @160 deg C).

Metallocene-catalyzed polyethylene-co-alpha-olefins used in the examples include Engage® 8402 and Vistamaxx® VM 1120 and PLTD 1859. Selected properties of the Vistamaxx® compositions are shown in Table 1.

**Table 1.**

| Composition | CM | MI | D | Shore A/D | MP | Softening Point |
|---|---|---|---|---|---|---|
| VM 1120 | C3 | 9 | 0.861 | 59/NA | ∼120 | 44 |
| PLTD 1859 | C3 | 100 | 0.866 | N/A | < 130 | |

In the above table, VM is Vistamaxx®, a metallocene-catalyzed ethylene propylene copolymer from ExxonMobil. CM is co-monomer, C3 is propylene, MI is melt index (g/10min, @ 190 deg C , 2.16 kg weight, ASTM D-1238), D is density in gm/cc, Shore A/ Shore D (hardness measurement by needle penetration resistance, ASTM D-2240), MP is melting point in degrees C (measured by Fisher Johns apparatus), and Softening Point is Vicat softening point (in degrees C , 200g, ASTM D-1525).

Certain properties of the Engage® 8402 used in the examples and other useful polyethylene-co-alpha-olefins are presented in Table 2. Engage® products are marketed by DuPont/Dow and Affinity® products are marketed by Dow Chemical Company. Exact® products are sold by ExxonMobil.

**Table 2.**

| **Product** | **CM%** | **M** | **D** | **Shore A/D** | **Flex Modulus Mpa** | **MP** | **Vicat Soft** | **Tensile MPa** | % **Elongation** |
|---|---|---|---|---|---|---|---|---|---|
| Engage 8402 | 22 C8 | 30 | 0.902 | 94/44 | 69.9 | 98 | 76 | 12.9 | 790 |
| Engage 8400 | 40 C8 | 30 | 0.870 | 72/20 | 12.1 | 60 | 41 | 3.3 | 1,010 |
| Engage 8407 | 40 C8 | 30 | 0.870 | 72/20 | 12.1 | 60 | 41 | 3.3 | 1,010 |
| Engage 8411 | 33 C8 | 18 | 0.880 | 81/22 | 21.9 | 72 | 46 | 6.5 | 900 |
| Engage 8401 | 31 C8 | 30 | 0.885 | 85/32 | 25.8 | 78 | 46 | 6.4 | 950 |
| Affinity SM 1300 | C8 | 30 | 0.902 | | 71 | 98 | 79 | 10 | 624 |
| Affinity EG 8185 | C8 | 30 | 0.885 | | | 83 | | | |
| Exact 8210 | C8 | 10 | 0.882 | 79/27 | 26.2 | 74 | 71 | 3.3/300% | no break |
| Exact 3040 | C6 | 16.5 | 0.900 | | 72 | 96 | | 48 | 540 |
| Exact 0230 | C8 | 30 | 0.902 | 88/39 | 79.5 | 95.4 | 91.9 | 11.3 | 1,679 |
| Exact 3017 | C4 | 27 | 0.901 | NA/36 | 74 | 92 | 67 | 9 | 730 |

| | | | | | | | | | |
|---|---|---|---|---|---|---|---|---|---|
| where: CM% is % comonomer in the polyethylene-co-alpha-olefin; MI is Melt Index g/10min@190 deg C, 2.16 kg weight as described in ASTM D-1238; D is Density (g/cc); Shore A and Shore D Hardness are measured as described in ASTM D-2240; Flex Modulus is Flexural Modulus is determined at 1% or 2% secant in Mpa as described in ASTM D-790; Mp is Melt Point as determined by differential scanning calorimetry (DSC) at 10deg/min; Vicat Soft is Vicat Softening Point in °C as described in ASTM D-1525; and Tensile strength (Ultimate/break) is in MPa and the method is described in ASTM D-638 and measured at 20in/min. | | | | | | | | | |

Other compositions used in the examples include Bakelite® EPR 695 (an epoxy resin, viscosity = 185 (mP-s units) @ 25 °C, 50% w/w in dioxane, softening range 95 °C), sold by Hexion Specialty Chemicals. A compatibilizer, Lotader® AX8840 (a reactive polyethylene/GMA resin sold by Arkema) was used in certain comparative examples. A light stabilizer (Cyasorb® UV 5411, 2-(2'-hydroxy=5'-octylphenyl)-benzotriazole from Cytec Industries) and an antioxidant (Cyanox® XS4, a blend of Cyanox® 1790 phenolic antioxidant and Doverphos 9228 hydrolytically stable phosphite antioxidant) were used in some compositions.

Hytrel® 4056 (Mp=150°C, Tg =-50 °C, a thermoplastic polyesterether elastomer marketed by DuPont), a low modulus Hytrel® grade with nominal durometer hardness of 40D, was used in some compositions. This elastomer contains a non-discoloring stabilizer.

In addition, segmented copolyesterethers, the bound components of which are shown in Table 3 below, were used in some compositions. These polymers were produced by a standard two stage process, wherein an esterification and/or transesterifi cation first stage is followed by final vacuum polyesterification stage. TPA is terephthalic acid, IPA is isophthalic acid, and BD is butanediol. PTMG (poly(tetramethyleneglycol)) is sometimes referred to as PTMEG, poly(tetramethylene ether) glycol, poly(butylene glycol), poly(tetramethyleneoxide) glycol, or poly(tetrahydrofuran). CHDA is 1,4-cyclohexanedicarboxylic acid. DMCD is dimethyl-1,4-cyclohexanedicarboxylate.

**Table 3.**

| | **D 1904E*** | **D 1905E*** | **D 1910E*** | **D 1843E*** |
|---|---|---|---|---|
| Mol-%BD-TPA (a) | 53 | 59 | 59 | 59 |
| Mol-%BD-IPA (a) | 47 | 41 | 41 | 41 |
| Mol%BD-BD (b) | 91 | 91 | 86 | 80 |
| Wt% copolyester segment (d) | 70 | 70 | 60 | 50 |
| Mol-% PTMG 1000 (b) | 9 | 9 | 14 | 20 |
| Wt % PTMG 1000 (c) | 30% | 30% | 40% | 50% |
| DSC MP (°C) | 116 | 128 | 119 | 105 |
| DSC Tg (°C) | -25 | -25 | -35 | -40 |
| Melt Visc Pa-s @160 °C | 389 | 316 | 450 | 226 |
| Melt Index @160 deg (g/10min) | 31 | 42 | 27 | 53 |

| | | | | |
|---|---|---|---|---|
| * Supplied by EMS Griltech - compositions and process specified by Inventors (a) These components are shown as mole percent of the total bound dibasic acid butanediol esters in the copolyester segments. BD-TA=as terephthalate, BD-IPA=as Isophthalate, BD-CHDA=as cyclohexanedicarboxylate (b) These components are shown as mole percent of total bound glycols. (c) Wt% PTMG 1000 as PTMO in final segmented copolyesterether (d) Wt % copolyester segment in final segmented copolyesterether | | | | |

Additional compositions having the bound component ratios presented in Table 4 were made by a standard two stage esterification and /or transesterification / final vacuum polyesterification process.

**Table 4.**

| | **GM 915*** | **GM 913*** | **GM 920*** |
|---|---|---|---|
| Mol-% BD-TA (a) | 65 | 65 | 50 |
| Mol-% BD-IPA (a) | 35 | 35 | |
| Mol-% BD-CHDA (a) | | | 50 |
| Wt% polyester segment ( c) | 70 | 60 | 70 |
| Wt % PTMEG segment ( b ) | 30 | 40 | 30 |
| Melt Viscosity @200°C Pa-s | 400 | 650 | 100 |
| DSC Mp °C | 139 | 126 | 107 |
| DSC Tg °C | -60 | -60 | -60 |

| | | | |
|---|---|---|---|
| * Supplied by Toyo Bosekikk Vylon®- compositions by analysis (unverified by supplier) (a) These components are shown as mole percent of the total bound dibasic acid butanediol esters in the copolyester segment. BD-TA=as terephthalate, BD-IPA=as Isophthalate, BD-CHDA=as cyclohexanedicarboxylate (b) Wt% PTMEG, Mn 1000-2000, in final segmented copolyesterether as PTMO (c) Wt % copolyester segment in final segmented copolyesterether. | | | |

For GM915, about 70 wt% of the composition is comprised of copolyester segments. The polyether segments represent about 30 wt% of the composition. The other compositions are designated in an analogous fashion.

Prototype blends were prepared by mechanical hand mixing of the melted components on a heated surface and applied to PET film followed by draw down of the melt under pressure between the top sheet and the base sheet to make the laminate. As the crystallization proceeded, peel strength was evaluated periodically over the first week of aging and at some times beyond.

Other hot melt blend formulations (250g each) were made in a Haake kneader-mixing bowl. Larger quantities of the formulations were made in a Buss Kneader Extruder (46mm), fitted with an under water die faced strand pelletizer followed by a fluidized bed pellet dryer.

### Comparative Examples A-F

The compositions shown in Table 5 were utilized in the formulations.

**Table 5.**

| | A | B | C | D | E | F |
|---|---|---|---|---|---|---|
| EMS Griltex D 1810 | 100 | | 83.34 | 90.90 | | |
| EMS Griltex D 1553 | | 100 | | | 83.34 | 90.90 |
| ENGAGE 8402 | | | 16.66 | 9.10 | 16.66 | 9.10 |

Comparative Examples C, D, E, and F using EMS Griltex® non-segmented random copolyesters (devoid of polyalkyleneoxide segments) were unsuitable for use in adhesive applications due to macrophase separation and gross incompatibility of the copolyester /ENGAGE 8402 blends, as well as gross loss of their mechanical/physical properties.

### Comparative Examples GI

As shown in Table 6, blend formulations were made using EMS Griltex non-segmented random copolyesters (devoid of polyalkyleneoxide segments), Engage® 8402, functionalized polyolefin compatibilizer and epoxy resin.

**Table 6.**

| Comparative Example | G | H | I |
|---|---|---|---|
| Ingredient | Wt% | Wt% | Wt% |
| EMS Griltex 1810 E (copolyester A) | 78.741 | 78.741 | |
| EMS Griltex 1553 E (copolyester B) | | | 75.709 |
| Bakelite EPR 695 | 7.874 | 11.811 | 11.358 |
| Lotader AX8840 | 3.937 | 2.628 | 3.790 |
| Engage 8402 | 7.874 | 5.246 | 7.569 |
| Cyasorb UV 5411 | 1.476 | 1.476 | 1.476 |
| Cyanox XS4 | 0.098 | 0.098 | 0.098 |
| Total | 100.000 | 100.000 | 100.000 |

Adhesive blends based on copolyesters (containing no polyalkyleneoxide segments) and polyethylene-co-alpha-olefin plastomers were only marginal adhesives. These compositions could only be obtained at lower Engage® 8402 content along with high concentrations of functionalized polyethylene compatibilizers and o-cresol novolac epoxy resins. Even then, only marginal compatibility was obtained, but the resultant hot melt adhesives gained viscosity or gelled in the extruder and lines during commercial application conditions. The PET film adhesion of these formulations was only marginally improved over the polyester itself.

Seven day peel test results are presented in Table 7. Laminates were produced in a heated hydraulic press (PHI model# QL-430), 1 min @153 psi @160 deg C, 0.75 milPET/ 3-5mil adhesive/0.75milPET. Laminate Peel Values (Instron Mini 44) --180 deg peel, 1 inch strip, 2"/min.

**Table 7.**

| Composition | 7 Day Aged Peel lbs/in (PLI) | Application Viscosity |
|---|---|---|
| Copolyester A | < 2.0 | OK |
| G | < 4.5 | Viscosity increased / gel formation |
| H | < 5.5 | Viscosity increased / gel formation |
| Copolyester B | < 1.5 | OK |
| l | < 3.0 | Viscosity increased / gel formation |

### Comparative Examples J-Q

The compositions of Table 8 were made by melt blending the components shown, including D 1843A, a segmented copolyesterether.

**Table 8.**

| Ingredient | Ex. J | Ex. K | Ex. L | Ex. M | Ex. N | Ex. O | Ex. P | Ex. Q |
|---|---|---|---|---|---|---|---|---|
| D1843A | 87.820 | 82.056 | 84.320 | 84.320 | 82.007 | 81.960 | 81.960 | 81.960 |
| Lotader AX8840 | 3.510 | 3.280 | 3.510 | 2.810 | 2.733 | 3.280 | 2.460 | 5.450 |
| Engage 8402 | 7.030 | 13.132 | 10.530 | 11.230 | 13.665 | 13.120 | 13.940 | 10.950 |
| Cyasorb UV 5411 | 1.540 | 1.439 | 1.540 | 1.540 | 1.498 | 1.540 | 1.540 | 1.540 |
| Cyanox XS4 | 0.100 | 0.093 | 0.100 | 0.100 | .097 | 0.100 | 0.100 | 0.100 |
| Total | 100 | 100 | 100 | 100 | 100 | 100 | 100 | 100 |

Viscosity measurements taken at 190 to 200 °C over time, 24 hours, for all formulations (including the lowest concentration of "compatibilizer" Lotader® AX8840 in the blend) showed viscosity increases. These viscosity increases could result in production line as well as application problems. No reduction in Engage® compatibility in the adhesive was seen as the amount of compatibilizer concentration was reduced. It is noted, that when formulating copolyesters (that do not contain polyether segments) alone with metallocene-catalyzed polyethylene-co-alpha-olefin plastomers without added sufficient functional compatibilizers, gross macrophase separation resulted accompanied by poor adhesive qualities and mechanical strength.

### Examples 1-7

The formulations shown in Table 9 were blended using a Haake mixing bowl (135-155 deg C mix temp.). 913, 915 and 920 are GM913, GM915, and GM920 respectively. The compositions of these segmented copolyesterethers by analysis is disclosed herein. 8402 is Engage® 8402 polyethylene-alpha-olefin described herein. 1843 is D 1843E, which is a segmented polyesterether whose composition is described herein.

The weight ratio nomenclature is as follows. A designation 25/25/50//20 indicates that the components represented by the first three numbers (before the //) are individual segmented polyesterether components present at 25%, 25% and 50% by weight respectively relative to the total segmented polyesterether component. The number after the //, in this case 20, indicates that 20 parts polyethylene-alpha-olefin per hundred parts segmented polyesterether components.

**Table 9.**

| Example | Composition | Weight Ratios |
|---|---|---|
| 1 | 915/920//8402 | 25/75//20 |
| 2 | 913/920//8402 | 25/75//20 |
| 3 | 913/920/Nistamaxx 1120 | 30/70//20 |
| 4 | 913/920/1843//8402 | 25/25/50//20 |
| 5 | 915/920/1843//8402 | 25/25/50//20 |
| 6 | 4056/1843//8402 | 23/77//23 |
| 7 | 4056/1843//8402 | 20/80//25 |

Scale-ups of these formulations were made in a 46 mm Buss Kneader Extruder at 135-150 deg C batch temperature as shown in Table 10. The numbers in the table are presented as weight percentages relative to the total composition.

**Table 10.**

| component | Ex. 1 | Ex. 2 | Ex. 3 | Ex. 4 | Ex. 5 | Ex. 6 | Ex. 7 |
|---|---|---|---|---|---|---|---|
| GM 920 | 61.511 | 61.511 | 58.334 | 20.501 | 20.501 | | |
| EMS Griltex 1843 | | | | 41.010 | 41.010 | 61.620 | 62.99 |
| GM915 | 20.505 | | | | 20.505 | | |
| GM913 | | 20.505 | 25.000 | 20.505 | | | |
| HYTREL 4056 | | | | | | 18.400 | 15.745 |
| VISTAM AX 1120 | | | 16.666 | | | | |
| ENGAGE 8402 | 16.404 | 16.404 | | 16.404 | 16.404 | 18.400 | 19.685 |
| CYASOR B UV 5411 | 1.480 | 1.480 | | 1.480 | 1.480 | 1.480 | 1.480 |
| CYANOX XS4 | 0.100 | 0.100 | | 0.100 | 0.100 | 0.100 | 0.100 |
| Total | 100 | 100 | 100 | 100 | 100 | 100 | 100 |

### Examples 8-13

The compositions of examples 1-5 and 7 were applied between two 0.75 mil PET films heat pressed to a 3-5 mil adhesive thickness to form the test laminates. Laminates were produced in a heated PHI model# QL-430 hydraulic press 1 min dwell @155 psi @160 deg C, 0.75 mil PET/ 3-5mil adhesive/0.75mil PET technique. Peel values (pli, lbs/in width) were measured using Laminate Peel Values-Instron Mini 44, 180 deg peel, 1 inch strip, 2"/min technique. Results are presented in Table 11 witch all numbers reported in pli units. Results were obtained at the temperatures listed. Watersoak laminate peel values were determined (after 24 hour water immersion). Control peel values were obtained at room temperature (77 deg F).

Peel test results 24 hours after lamination are reported in Table 11.

**Table 11.**

| Ex. | Comp. (Example Number) | Unblended copolyesterether Control (no 8402) 77° F Peel | Room Temperature 77 °F Peel | 125 °F Peel | 150 °F Peel | 24 hr Watersoak 77 °F Peel |
|---|---|---|---|---|---|---|
| 8 | 1 | < 7.5 | 12.18 | 6.33 | 3.26 | 15.14 |
| 9 | 5 | < 7.5 | 13.61 | 3.77 | 0.74 | 15.20 |
| 10 | 2 | < 7.5 | 13.78 | 6.98 | 5.41 | 17.80 |
| 11 | 4 | < 7.5 | 14.74 | 5.30 | 1.84 | 6.92 |
| 12 | 7 | < 7.5 | 10.68 | 3.86 | 1.10 | 12.51 |
| 13 | 3 | < 8.0 | > 14.00 | > 7.00 | > 5.00 | > 18.00 |

### Examples 14-19

Peel results after structures were aged 7 days after lamination are presented in Table 12. Other details are the same as in Examples 8-13.

**Table 12.**

| Example | Composition (Example Number) | Unblended Segmented Polyestereth er Control (no 8402) 77 °F Peel | Room Temp (77 °F) Peel | 125 °F Peel | 150 °F Peel | Watersoak 77 °F Peel |
|---|---|---|---|---|---|---|
| 14 | 1 | < 2.5 | 20.36 | 8.03 | 4.16 | 11.09 |
| 15 | 5 | < 2.5 | 5.80 | 4.12 | 0.91 | 17.00 |
| 16 | 2 | < 2.5 | 20.82 | 9.37 | 6.79 | 18.52 |
| 17 | 4 | < 2.5 | 8.08 | 8.24 | 4.09 | 23.25 |
| 18 | 7 | < 2.5 | 17.8 | 8.56 | 1.30 | 15.43 |
| 19 | 3 | < 2.0 | > 20.00 | > 10.00 | > 7.00 | > 18.00 |

### Examples 20 and 21, Comparative Examples R and S

Peel values using PET/adhesive/PET laminates consisting of 0.75 mil PET film thickness with a 25 g/sq meter adhesive coat weight were performed after 0, 6, 18, weeks exposure in a humidity chamber at 50 °C at 95% relative humidity (RH). The peel test (pli - pounds/linear inch) was run as described above except as noted. The results obtained are presented in Table 13.

**Table 13.**

| Example | Composition (Example Number) | Before Exposure | After 6 Weeks of Exposure | After 18 Weeks of Exposure |
|---|---|---|---|---|
| 20 | 2 | > 12 pli | >12 pli | 6-8 pli |
| 21 | 4 | 11-12 pli | 10.2 pli | 6-8 pli |
| Comparative R | -- | >4 pli | 2.4 pli | 0.2-0.3 pli |
| Comparative S | -- | >4 pli | 1.12 pli | 0.2-0.3 pli |

| | | | | |
|---|---|---|---|---|
| R = Bostik 1910 S = Bostik 1912 | | | | |

These are commercial random flexible semicrystalline copolyesters reported and marketed by supplier to have improved retained laminate adhesion and improved laminate adhesion after prolonged exposure to high humidity.

## Claims

1. An article comprising a substrate and an adhesive composition, the adhesive comprising:
(a) one or more segmented copolyesterethers derived from:
at least one glycol selected from the group consisting of C₂-C₁₂ aliphatic glycols and C₅-C₁₂ cycloaliphatic glycols;
at least one α,ω-hydroxy terminated polyalkyleneoxide having a number average molecular weight of from about 250 to about 6000; and
at least one dibasic acid compound selected from the group consisting of C₈-C₃₆ aromatic dibasic acids, cycloaliphatic dibasic acids, C₆-C₁₂ linear aliphatic dibasic acids, and C₁-C₄ dialkylesters thereof; and
(b) one or more metallocene-catalyzed polyethylene-co-alpha-alefin plastomers, said plastomers being essentially free of reactive functional groups;
wherein the composition is essentially free of external reactive functionalized polyolefin compatibilizers.

2. An article of claim 1 wherein the adhesive is comprising from 3 to 45 parts by weight or from 5 to 35 parts by weight or from 10 to 30 parts by weight, of the one or more metallocene-catalyzed polyethylene-co-(C₃-C₁₂)-alpha-olefin plastomers per 100 parts by weight of the one or more segmented copolyesterethers.

3. An article of one of claim 1 or 2, wherein the one or more segmented copolyesterethers have weight average molecular weights of from about 20,000 to about 110,000.

4. An article of one of claim 1 or 2, wherein the one or more segmented copolyesterethers contain crystalline polyester segments.

5. An article of one of claim 1 to 4, wherein the one or more metallocene-catalyzed polyethylene-co-alpha-olefin plastomers have a melt index of about 2 dg/min to about 100 dg/min, as measured at 190 degrees C, 2.16 Kg, by ASTM D-1238.

6. An article of one of claim 1 to 5, wherein the at least one glycol includes a glycol selected from the group consisting of 1,4-butanediol, 1,6-hexanediol and 1,4-cyclohexanedimethanol.

7. An article of one of claim 1 to 6, wherein the at least one α,ω-hydroxy terminated polyalkyleneoxide includes a polytetramethyleneoxide glycol.

8. An article of one of claim 1 to 7, wherein the at least one dibasic acid compound includes at least one of 1,4-cyclohexanedicarboxylic acid (CHDA) and terephthalic acid.

9. An article of one of claim 1 to 7 wherein the at least one dibasic acid compound includes at least one of terephthalic acid and isophthalic acid.

10. An article of claim 1 wherein the segmented copolyesterether is derived from:
at least one glycol selected from the group consisting of butanediol, 1,6-hexanediol and cyclohexanedimethanol;
at least one polytetramethylene glycol; and
at least one dibasic acid compound selected from the group consisting of 1,4-cyclohexanedicarboxylic acid, terephthalic acid and isophthalic acid.

11. An article of one of claims 1 to 10 wherein the substrate is a fabric or film.

12. An article of claim 11 wherein the substrate is a polyethyleneterephthalate film.

13. A method of making an article according to one of claim 1 to 12 by applying an adhesive composition to a surface of a substrate in molten form.

14. A method of making an article according to one of claim 1 to 12 by applying an adhesive composition to a surface of a substrate in solid form and then melt fused to the substrate.

15. A method of claim 13 or 14 further comprising contacting said adhesive, which has been applied to the substrate, with a second surface, the second surface being a surface of a second substrate or a different surface of the substrate to which the hot melt adhesive was initially applied.

## Patentansprüche

1. Gegenstand, der ein Substrat und eine Klebstoffzusammensetzung umfasst, wobei der Klebstoff Folgendes umfasst:
(a) ein oder mehrere segmentierte Copolyester/-ether, die von folgenden abgeleitet sind:
mindestens einem Glykol, das aus der Gruppe bestehend aus aliphatischen C₂-C₁₂-Glykolen und cycloaliphatischen C₅-C₁₂-Glykolen ausgewählt ist;
mindestens einem α,ω-hydroxyterminierten Polyalkylenoxid mit einem zahlengemittelten Molekulargewicht von etwa 250 bis etwa 6000 und
mindestens einer zweibasischen Säureverbindung, die aus der Gruppe bestehend aus aromatischen zweibasischen C₈-C₃₆-Säuren, cycloaliphatischen zweibasischen Säuren, linearen aliphatischen zweibasischen C₆-C₁₂-Säuren und C₁-C₄-Dialkylestern davon ausgewählt ist; und
(b) ein oder mehrere metallocenkatalysierte Polyethylen-co-Alpha-Olefin-Plastomere, wobei die Plastomere im Wesentlichen frei von reaktiven funktionellen Gruppen sind;
wobei die Zusammensetzung im Wesentlichen frei von externen reaktiven funktionalisierten Polyolefin-Verträglichkeitsvermittlern ist.

2. Gegenstand nach Anspruch 1, wobei der Klebstoff aus 3 bis 45 Gewichtsteilen oder 5 bis 35 Gewichtsteilen oder 10 bis 30 Gewichtsteilen des einen oder der mehreren metallocenkatalysierten Polyethylen-co-(C₃-C₁₂)-Alpha-Olefin-Plastomere pro 100 Gewichtsteile des einen oder der mehreren segmentierten Copolyester/-ether umfasst.

3. Gegenstand nach einem der Ansprüche 1 oder 2, wobei das eine oder die mehreren segmentierten Copolyester/-ether gewichtsmittlere Molekulargewichte von etwa 20.000 bis etwa 110.000 aufweisen.

4. Gegenstand nach einem der Ansprüche 1 oder 2, wobei das eine oder die mehreren Copolyester/-ether kristalline Polymersegmente enthalten.

5. Gegenstand nach einem der Ansprüche 1 bis 4, wobei das eine oder die mehreren metallocenkatalysierten Polyethylen-co-Alpha-Olefin-Plastomere einen Schmelzindex von etwa 2 dg/min bis etwa 100 dg/min aufweisen, wie bei 190 °C, 2,16 kg, gemäß ASTM D-1238 gemessen.

6. Gegenstand nach einem der Ansprüche 1 bis 5, wobei das mindestens eine Glykol ein Glykol beinhaltet, das aus der Gruppe bestehend 1,4-Butandiol, 1,6-Hexandiol und 1,4-Cyclohexandimethanol ausgewählt ist.

7. Gegenstand nach einem der Ansprüche 1 bis 6, wobei das mindestens eine α,ω-hydroxyterminierte Polyalkylenoxid ein Polytetramethylenoxidglykol beinhaltet.

8. Gegenstand nach einem der Ansprüche 1 bis 7, wobei die mindestens eine zweibasische Säureverbindung 1,4-Cyclohexandicarbonsäure (CHDA) und/oder Terephthalsäure beinhaltet.

9. Gegenstand nach einem der Ansprüche 1 bis 7, wobei die mindestens eine zweibasische Säureverbindung Terephthalsäure und/oder Isophthalsäure beinhaltet.

10. Gegenstand nach Anspruch 1, wobei der segmentierte Copolyester/-ether von folgenden abgeleitet ist:
mindestens einem Glykol, das aus der Gruppe bestehend aus Butandiol, 1,6-Hexandiol und Cyclohexandimethanol ausgewählt ist;
mindestens einem Polytetramethylenglykol und
mindestens einer zweibasischen Säureverbindung, die aus der Gruppe bestehend aus 1,4-Cyclohexandicarbonsäure, Terephthalsäure und Isophthalsäure ausgewählt ist.

11. Gegenstand nach einem der Ansprüche 1 bis 10, wobei es sich bei dem Substrat um ein Gewebe oder eine Folie handelt.

12. Gegenstand nach Anspruch 11, wobei es sich bei dem Substrat um eine Polyethylenterephthalatfolie handelt.

13. Verfahren zur Herstellung eines Gegenstands nach einem der Ansprüche 1 bis 12 durch Aufbringen einer Klebstoffzusammensetzung auf eine Oberfläche eines Substrats in geschmolzener Form.

14. Verfahren zur Herstellung eines Gegenstands nach einem der Ansprüche 1 bis 12 durch Aufbringen einer Klebstoffzusammensetzung auf eine Oberfläche eines Substrats in fester Form und dann Aufschmelzen auf das Substrat.

15. Verfahren nach Anspruch 13 oder 14, das weiterhin das Inkontaktbringen des Klebstoffs, der auf das Substrat aufgebracht wurde, mit einer zweiten Oberfläche umfasst, wobei es sich bei der zweiten Oberfläche um eine Oberfläche eines zweiten Substrats oder eine andere Oberfläche des Substrats, auf das der Schmelzklebstoff anfangs aufgebracht wurde, handelt.

## Revendications

1. Article comprenant un substrat et une composition adhésive, l'adhésif comprenant :
(a) un ou plusieurs copolyesteréthers segmentés qui dérivent :
d'au moins un glycol choisi parmi le groupe constitué par des glycols aliphatiques en C₂-C₁₂ et des glycols cycloaliphatiques en C₅-C₁₂;
d'au moins un oxyde de polyalkylène terminé par des groupes hydroxyle en α,ω possédant un poids moléculaire moyen en nombre d'environ 250 à environ 6000 ; et
d'au moins un composé d'acide dibasique choisi parmi le groupe constitué par des acides dibasiques aromatiques en C₈-C₃₆, des acides dibasiques cycloaliphatiques, des acides dibasiques aliphatiques linéaires en C₆-C₁₂, et leurs esters dialkyliques en C₁-C₄ ; et
(b) un ou plusieurs coplastomères de polyéthylène-alpha oléfine catalysés avec un métallocène, lesdits plastomères étant essentiellement exempts de groupes fonctionnels réactifs ;
dans lequel la composition est essentiellement exempte d'agents de compatibilité externes réactifs fonctionnalisés à base de polyoléfines.

2. Article selon la revendication 1, dans lequel l'adhésif comprend de 3 à 45 parties en poids ou de 5 à 35 parties en poids ou de 10 à 30 parties en poids d'un ou de plusieurs coplastomères de polyéthylène-alpha oléfine en C₃-C₁₂ catalysés avec un métallocène par 100 parties en poids desdits un ou plusieurs copolyesteréthers segmentés.

3. Article selon la revendication 1 ou 2, dans lequel lesdits un ou plusieurs copolyesteréthers segmentés possèdent des poids moléculaires moyens en poids d'environ 20.000 à environ 110.000.

4. Article selon la revendication 1 ou 2, dans lequel lesdits un ou plusieurs copolyesteréthers segmentés contiennent des segments de polyesters cristallins.

5. Article selon l'une quelconque des revendications 1 à 4, dans lequel lesdits un ou plusieurs coplastomères de polyéthylène-alpha oléfine catalysés avec un métallocène possèdent un indice de fluidité à chaud d'environ 2 dg/min à environ 100 dg/min, tel qu'on le mesure à 190 °C, sous une charge de 2,16 kg, via le procédé ASTM D-1238.

6. Article selon l'une quelconque des revendications 1 à 5, dans lequel ledit au moins un glycol englobe un glycol choisi parmi le groupe constitué par le 1,4-butanediol, le 1,6-hexanediol et le 1,4-cyclohexanediméthanol.

7. Article selon l'une quelconque des revendications 1 à 6, dans lequel ledit au moins un oxyde de polyalkylène terminé par des groupes hydroxyle en α,ω englobe un oxyde de polytétraméthylène glycol.

8. Article selon l'une quelconque des revendications 1 à 7, dans lequel ledit au moins un composé d'acide dibasique englobe au moins un acide choisi parmi l'acide 1,4-cyclohexanedicarboxylique (CHDA) et l'acide téréphtalique.

9. Article selon l'une quelconque des revendications 1 à 7, dans lequel ledit au moins un composé d'acide dibasique englobe au moins un acide choisi parmi l'acide téréphtalique et l'acide isophtalique.

10. Article selon la revendication 1, dans lequel le copolyesteréther segmenté dérive :
d'au moins un glycol choisi parmi le groupe constitué par le butanediol, le 1,6-hexanediol et le cyclohexanediméthanol ;
d'au moins un polytétraméthylène glycol ; et
d'au moins un composé d'acide dibasique choisi parmi le groupe constitué par l'acide 1,4-cyclohexanedicarboxylique, l'acide téréphtalique et l'acide isophtalique.

11. Article selon l'une quelconque des revendications 1 à 10, dans lequel le substrat est un tissu ou un film.

12. Article selon la revendication 11, dans lequel le substrat est un film de polyéthylène téréphtalate.

13. Procédé de fabrication d'un article selon l'une quelconque des revendications 1 à 12, dans lequel on applique une composition adhésive sur une surface d'un substrat à l'état fondu.

14. Procédé de fabrication d'un article selon l'une quelconque des revendications 1 à 12, dans lequel on applique une composition adhésive sur une surface d'un substrat sous forme solide, avant de la fusionner au substrat par mise en fusion.

15. Procédé selon la revendication 13 ou 14, comprenant en outre la mise en contact dudit adhésif, qui a été appliqué sur le substrat, avec une deuxième surface, la deuxième surface représentant une surface d'un deuxième substrat ou bien une surface différente du substrat auquel on a appliqué initialement l'adhésif thermofusible.
